# EUROPEAN PATENT APPLICATION

(11) **EP 4 525 348 A1**
(43) Date of publication of application: **19.03.2025**
(21) Application number: 24185778.8
(22) Date of filing: 01.07.2024
(51) Int. Cl.: H04L 9/08

(54) **KEY MANAGEMENT SERVER DEVICE, QKD SYSTEM, AND KEY MANAGEMENT METHOD**

(30) Priority: 13.09.2023 JP 2023148034
(71) Applicant: Kabushiki Kaisha Toshiba, Tokyo 105-0023 (JP)
(72) Inventor: ITO, Masashi, Tokyo (JP); KIMURA, Katsuyuki, Tokyo (JP); KANAZAWA, Koji, Tokyo (JP)
(74) Representative: Marks & Clerk LLP

(57) **Abstract**

According to an arrangement, a key management server device (1a) includes: a receiving unit (11) that receives, from a plurality of key generation nodes (2), quantum key distribution (QKD) keys generated through a key distillation process for QKD; a control unit (12) that identifies QKD keys to be specified as targets for shaping processing with a partner key management server device (1b), by exchanging identification information of the QKD keys with the partner key management server device (1b); a numbering unit (13) that performs numbering in such a way that order of dividing a QKD key or of coupling a QKD key with a part of a QKD key that is not used in previous shaping processing is identical with the partner key management server device (1b); and a shaping unit (14) that performs shaping processing for shaping key lengths of QKD keys to a fixed length by performing the division or the coupling in the order.

## Description

### FIELD

The present disclosure relates to a key management server device, a QKD system, and a key management method.

### BACKGROUND

Conventionally, a quantum key distribution (QKD) device is known that sends data to and receives data from a singular key generation node. Consider a case in which a plurality of such key generation nodes is used; the QKD keys sent from those key generation nodes are collected in a single key management server; and shaping of the key length is performed either by dividing the QKD keys or by coupling the QKD keys. In that case, the mismatch in the generation timings of the QKD keys causes a mismatch between the transmitting side and the receiving side about the combination of the QKD keys to be divided or coupled.

Such mismatch among the key generation nodes can be eliminated by disposing a key management server with respect to each of a plurality of key generation nodes. However, as a result of disposing a plurality of key management servers, more operation resources get consumed. In order to solve that problem, it is necessary to resolve the issue of appropriately setting the combination of generation timings of the QKD keys between the transmitter and the receiver.

### BRIEF DESCRIPTION OF THE DRAWINGS

Fig. 1 is a diagram illustrating an exemplary functional configuration of a key management server device according to the first arrangement;
Fig. 2 is a diagram for explaining an example in which the order of the QKD keys on the transmitting side (Alice) does not match with the order of the QKD keys on the receiving side (Bob);
Fig. 3 is a flowchart for explaining an example of the operations performed in the key management server device on the receiving side according to the first arrangement;
Fig. 4 is a flowchart for explaining an example of the operations performed in the key management server device on the transmitting side according to the first arrangement;
Fig. 5 is a diagram illustrating an exemplary functional configuration of a key management server device according to a second arrangement;
Fig. 6 is a diagram illustrating an example of a specification rate table according to the second arrangement;
Fig. 7A is diagram illustrating a decision example 1 about a specification order table according to the second arrangement;
Fig. 7B is diagram illustrating a decision example 2 about the specification order table according to the second arrangement;
Fig. 7C is diagram illustrating a decision example 3 about the specification order table according to the second arrangement;
Fig. 8 is a flowchart for explaining an example of the operations performed in the key management server device on the receiving side according to the second arrangement;
Fig. 9 is a flowchart for explaining an example of the operations performed in the key management server device on the transmitting side according to the second arrangement;
Fig. 10 is a diagram illustrating an exemplary functional configuration of a key management server device according to a third arrangement;
Fig. 11 is a flowchart for explaining an example of the operations performed in the key management server device on the receiving side according to the third arrangement;
Fig. 12 is a flowchart for explaining an example of the operations performed in the key management server device on the transmitting side according to the third arrangement; and
Fig. 13 is a diagram illustrating an exemplary hardware configuration of the key management server devices according to the first to third arrangements.

### DETAILED DESCRIPTION

According to an arrangement, a key management server device includes a receiving unit, a control unit, a numbering unit, and a shaping unit. The receiving unit receives, from a plurality of key generation nodes, quantum key distribution (QKD) keys generated through a key distillation process for QKD, and stores the QKD keys in a plurality of memory units corresponding to the plurality of key generation nodes. The control unit identifies QKD keys to be specified as targets for shaping processing with a partner key management server device, by exchanging identification information of the QKD keys with the partner key management server device. The numbering unit, based on the identification information of the QKD keys, performs numbering in such a way that order of dividing a QKD key or of coupling a QKD key with a part of a QKD key that is not used in previous shaping processing is identical with the partner key management server device. The shaping unit performs shaping processing for shaping key lengths of QKD keys to a fixed length by performing the division of the QKD key or the coupling of the QKD key with the part of the QKD key that is not used in the previous shaping processing in the order.

Exemplary arrangements of a key management server device, a QKD system, and a key management method will be explained below in detail with reference to the accompanying drawings.

### First arrangement

In a first arrangement, in a QKD system, an optical device and a key distillation process (hereinafter, called a "key generation node") are multiplexed, and a single key management server device obtains QKD keys from a plurality of key generation nodes. Then, the key management server device according to the first arrangement matches the order of the QKD keys between itself and a partner key management server device, to shape the key length either by dividing the QKD keys or by coupling the QKD keys. In the key management server device according to the first arrangement, the computation resources can be used in an efficient manner as compared to the case in which key management is performed in each singular key generation node.

### Exemplary functional configuration

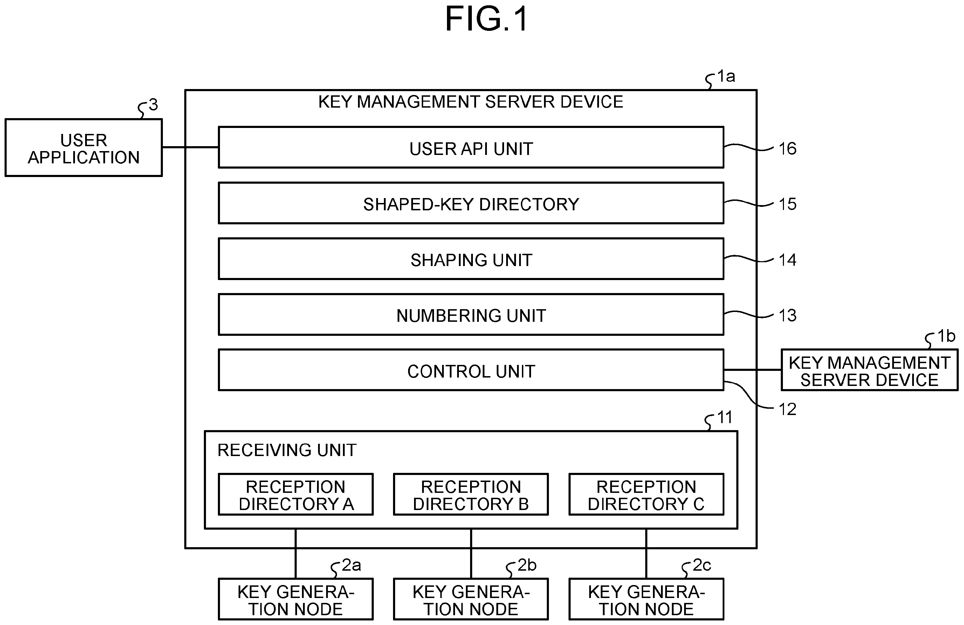

Fig. 1 is a diagram illustrating an exemplary functional configuration of a key management server device 1a according to the first arrangement. The key management server device 1a according to the first arrangement is connected to a plurality of key generation nodes 2a to 2c (representing optical devices and key distillation processes), a partner key management server device 1b, and a user application 3.

A QDK system according to the first arrangement includes the key generation nodes 2a to 2c (first key generation nodes) that generate QKD keys generated through the key distillation process for QKD; and includes the key management server device 1a (a first key management server device) that is connected to the key generation nodes 2a to 2c.

Moreover, in the QKD system according to the first arrangement, in an identical manner, the partner key management server device 1b (a second key management server device) too includes a plurality of key generation nodes (second key generation nodes) that generates QKD keys generated through the key distillation process for QKD.

Meanwhile, in Fig. 1, neither the functional configuration of the partner key management server device 1b is illustrated, nor a plurality of key generation nodes connected to the partner key management server device 1b is illustrated.

The key management server device 1 according to the first arrangement includes a receiving unit 11, a control unit 12, a numbering unit 13, a shaping unit 14, a shaped-key directory 15, and a user API unit 16 (API stands for Application Programming Interface).

The receiving unit 11 continuously receives QKD keys that are generated by the key generation nodes 2a to 2c, and stores the QKD keys in reception directories A to C (an example of a plurality of memory units) that correspond to the key generation nodes 2a to 2c, respectively. Each QKD key is assigned with identification information depending on whether it is generated by the key generation node 2a, or the key generation node 2b, or the key generation node 2c. For example, the identification information of a QKD key contains an identifier identifying that QKD key and contains an identifier identifying the key generation node from among the key generation nodes 2a to 2c that generates the concerned QKD key.

The control unit 12 exchanges the identifier of a QKD key with the partner key management server device 1b, so that the concerned QKD key is identified between the key management server device 1a and the partner key management server device 1b. More particularly, the control unit 12 monitors the receiving unit 11 and, when the receiving unit 11 receives a QKD key, exchanges the identifier of that QKD key with the partner key management server 1b. Thus, the control unit 12 requests the partner key management server device 1b to perform numbering based on the identification information of the QKD keys, such that the order of the QKD keys to be specified as the targets of shaping processing becomes the same, by sending the identification information of the QKD keys to the partner key management server device 1b.

Based on the identifiers of the QKD keys, the numbering unit 13 numbers the QKD keys in such a way that the QKD keys to be divided or coupled are in the same order in the key management server device 1a and the partner key management server device 1b. More particularly, when the control unit 12 confirms that the same QKD keys are present in the partner key management server device 1b, the numbering unit 13 assigns unique key numbers (QKD uniform key numbers) to the QKD keys generated by the plurality of key generation nodes 2.

The shaping unit 14 repeatedly performs shaping in such a way that a plurality of pairs of QKD keys between the key management server device 1a and the partner key management server device 1b is divided or coupled and each of a plurality of numbered QKD keys has a fixed key length.

The shaped-key directory 15 is used to store the QKD keys (encryption keys) that have been subjected to key length shaping.

The user API unit 16 provides an encryption key to the user application 3. For example, when a request for a QKD key is received from the user application 3; the user API unit 16 sends, to the user application 3, a QKD key shaped to have a fixed key length.

Meanwhile, the partner key management server device 1b has an identical functional configuration to the functional configuration of the key management server device 1a.

In the following explanation, when the key management server devices 1a and 1b need not be distinguished from each other, they are simply referred to as the key management server devices 1. Moreover, when the key generation nodes 2a to 2c need not be distinguished from each other, they are simply referred to as the key generation nodes 2.

In the following explanation, according to the practices used in the explanation about the field of cryptographic communication, the transmitting side (i.e., the key generation nodes 2 included in the transmitter of an optical device, and the key management server device 1b connected to that transmitter) is referred to as Alice. Moreover, the receiving side (i.e., the key generation nodes 2 included in the receiver of an optical device, and the key management server device 1a connected to that receiver) is referred to as Bob.

As a result of performing the key distillation process, regarding the generation of QKD keys in the Alice and in the Bob, synchronization is achieved in the key generation nodes 2a to 2c. Thus, as far as the same key generation node 2 is concerned, there is never a mismatch in the order of the QKD keys in the Alice and in the Bob.

Meanwhile, since the key generation nodes 2 generate QKD keys in a mutually asynchronous manner, there is a possibility that the identifier of a QKD key in a particular key generation node 2 is duplicated as the identifier of a QKD key in another key generation node 2.

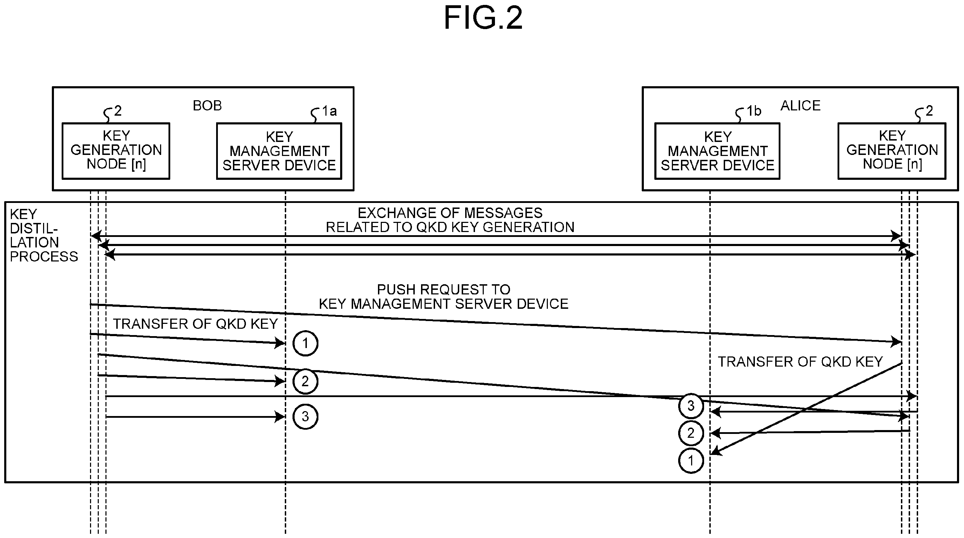

Explained below with reference to Fig. 2 is a case in which, when QKD keys are received from a plurality of key generation nodes 2, the order of the QKD keys in the Alice does not match with the order of the QKD keys in the Bob.

Fig. 2 is a diagram for explaining an example in which the order of the QKD keys on the transmitting side (Alice) does not match with the order of the QKD keys on the receiving side (Bob). In Fig. 2 is illustrated a case in which a count n indicating the number of key generation nodes 2 is equal to "3". However, the count n is not limited to be equal to "3" and can be equal to an arbitrary number.

Firstly, as a result of exchanging messages related to QKD key generation, pairs of QKD keys are generated across the Alice and the Bob.

After the pairs of QKD keys are generated across the Alice and the Bob, a push request meant for sending a QKD key to the key management server device 1b is issued by the key generation node 2 on the receiving side to the key generation node 2 on the transmitting side.

Then, using the file transfer protocol SCP, a QKD key is transferred from the key generation node 2 to the receiving unit 11.

At that time, because of the delay fluctuation in the communication network, sometimes the push requests issued by the key generation nodes 2 to the key management server device 1b reach at different timings to the key generation nodes 2 in the Alice. For that reason, the order of the key generation nodes 2 that issued the push requests in the Bob is sometimes different than the order of the key generation nodes 2 that receive the push requests in the Alice.

Moreover, in the SCP-based file transfer too, the data having a large size is transferred in successive packets. Hence, there are times when the transfer period starting from the transfer of a QKD key to the completion of transfer of data equivalent to a single file differs for each key generation node 2. For that reason, the order of the key generation nodes 2 that have completed the transfer in the Bob is sometimes different than the order of the key generation nodes 2 that have completed the transfer in the Alice.

Given below is the explanation of an operation performed in the key management server device 1a according to the first arrangement for matching the order of the QKD keys, which are to be subjected to key length shaping, across the key management server device 1a and the partner key management server device 1b.

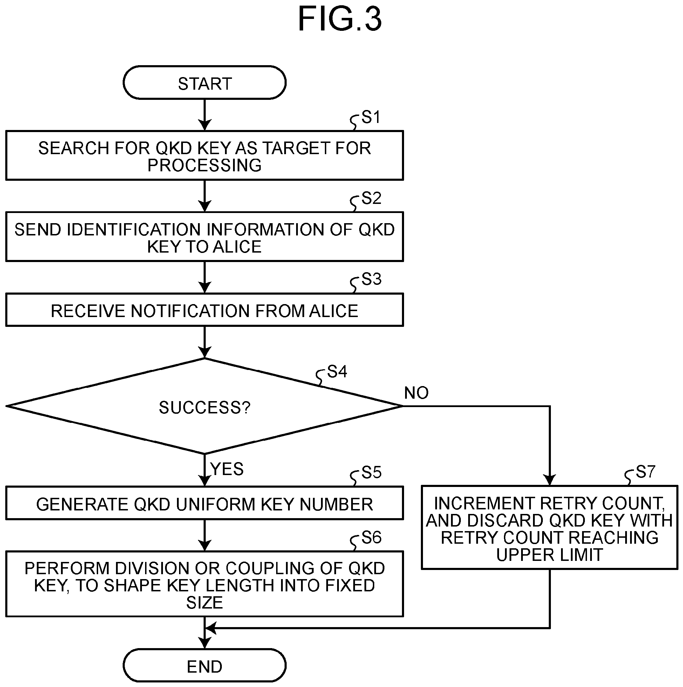

Fig. 3 is a flowchart for explaining an example of the operations performed in the key management server device 1a on the receiving side (Bob) according to the first arrangement. Firstly, the control unit 12 of the Bob searches the reception directories A to C, in which the QKD keys are stored, for a QKD key that is not yet specified as the target for shaping processing or for the oldest QKD key from among the QKD keys that have been previously specified as the targets for shaping processing before the elapse of a certain period of time (Step S1).

Then, the control unit 12 sends, to the Alice, QKD key identification information that contains the identifier assigned to the QKD key retrieved at Step S1 and contains the identifier of the key generation node 2 that generates the concerned QKD key (Step S2).

Subsequently, the control unit 12 receives a notification from the Alice (Step S3). If the notification received at Step S3 is about a response indicating success, that is, if the notification indicates that the same QKD key is present in the Alice too (Yes Step S4), then the numbering unit 13 generates a QKD uniform key number identifying the QKD key as the target for processing retrieved at Step S1 (Step S5). The QKD uniform key number is generated based on the identifier of the key generation node 2 and the identifier of the QKD key and according to the rules prearranged with the Alice. For that reason, if those two identifiers are same, then the same QKD key uniform number is generated in the Alice and in the Bob.

Then, the shaping unit 14 performs the shaping processing for shaping the key length of the QKD key to a fixed length by either dividing the QKD key retrieved at Step S1 or coupling the QKD key retrieved at Step S1 with a part of the QKD key that is not used in the previous shaping processing in the order set according to the QKD key uniform numbers (Step S6).

Herein, a QKD key is stored in a file format, and is used in shaping starting from the data in the front part of that file. The unused data is stored in a buffer, and is used for coupling with the next key during the next key length shaping.

Meanwhile, at Step S4, if the response from the Alice does not indicate success (No at Step S4), then the control unit 12 increments the retry count with respect to the concerned QKD key, and discards the QKD key with the retry count reaching the upper limit (Step S7).

Until the retry count reaches the upper limit, for example, either among the QKD keys that are previously specified as the target for shaping processing before the elapse of a certain period of time or among the QKD keys that are yet to be specified as the targets for shaping processing, the control unit 12 searches for the QKD key to be specified as the target for shaping processing in chronological order of generation.

Given below is the explanation of an operation performed in the key management server device 1b according to the first arrangement for matching the order of the QKD keys, which are to be subjected to key length shaping, across the key management server device 1b and the partner key management server device 1a.

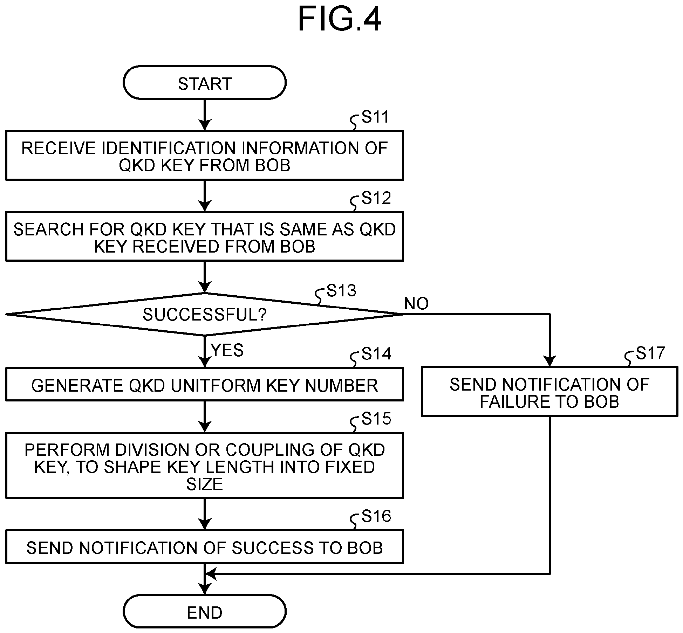

Fig. 4 is a flowchart for explaining an example of the operations performed in the key management server device 1b on the transmitting side (Alice) according to the first arrangement. Firstly, the control unit 12 of the Alice receives, from the Bob, the identification information of the QKD key (i.e., the identifier of the QKD assigned by the key generation node 2 and the identifier of the key generation node 2 that generates the QKD key) (Step S11).

Then, in the reception directories A to C of the receiving unit 11 of the Alice, the control unit 12 searches for the QKD key having the same identifier as the identifier of the QKD key that is sent from the Bob (Step S12) .

If the same QKD key as the QKD key present in the Bob is found (Yes at Step S13), then the numbering unit 13 generates a QKD uniform key number for the concerned QKD key (Step S14).

Subsequently, the shaping unit 14 either divides the QKD key having the QKD uniform key number assigned thereto or couples the QKD key, which has the QKD uniform key assigned thereto, with a QKD key that is left over in the previous time, to shape the key length into a fixed size (Step S15).

Herein, in an identical manner to the case of the receiving side (Bob), a QKD key is stored in a file format, and is used in shaping starting from the data in the front part of that file. The unused data is stored in a buffer, and is used for coupling with the next key during the next key length shaping.

Subsequently, the control unit 12 sends a notification of success to the Bob (Step S16).

Meanwhile, at Step S13, if the same QKD key as the QKD key present in the Bob is not found (No at Step S13), then the control unit 12 responds to the Bob with a notification of failure (Step S17).

As explained above, in the key management server device 1a according to the first arrangement, the receiving unit 11 receives QKD keys, which are generated through a QKD key distillation process, from the key generation nodes 2a to 2c; and stores the QKD keys in a plurality of memory units corresponding to the key generation nodes 2a to 2c (in the first arrangement, in the reception directories A to C, respectively). The control unit 12 exchanges the identification information of the QKD key with the partner key management server device 1b, and identifies the QKD key, which is to be specified as the target for shaping processing with the partner key management server device 1b. Based on the identification information of the QKD keys, the numbering unit 13 performs numbering in such a way that the order of dividing a QKD key or of coupling a QKD key with a part of QKD key that is not used in the previous shaping is same as the order in the partner key management server device 1b. Then, the shaping unit 14 performs shaping processing of shaping the key length of the QKD to a fixed length by either dividing a QKD key or coupling a QKD key with a part of a QKD key that is not used in the previous shaping processing in the order set by the numbering unit 13.

As a result, according to the first arrangement, even when a plurality of key generation nodes 2a to 2c is connected to the key management server device 1a, it becomes possible to prevent a mismatch in the shaping of the QKD keys. More particularly, between the pair of the key management server devices 1a and 1b, the QKD key generation timings that are likely to be different in the key generation nodes 2a to 2c on the transmitting side than in the key generation nodes 2a to 2c on the receiving side can be set in an appropriate order by the numbering unit 13.

According to the first arrangement, it becomes possible to achieve further reduction in the operation resources used in the shaping processing, and to prevent a mismatch among the QKD keys thereby enabling prevention of a decline in the key generation rate that may occur due to any such mismatch.

### Second arrangement

Given below is the description of a second arrangement. In the description of the second arrangement, the same explanation as given in the first arrangement is not repeated. Thus, the following explanation is given only about the differences with the first arrangement.

### Exemplary functional configuration

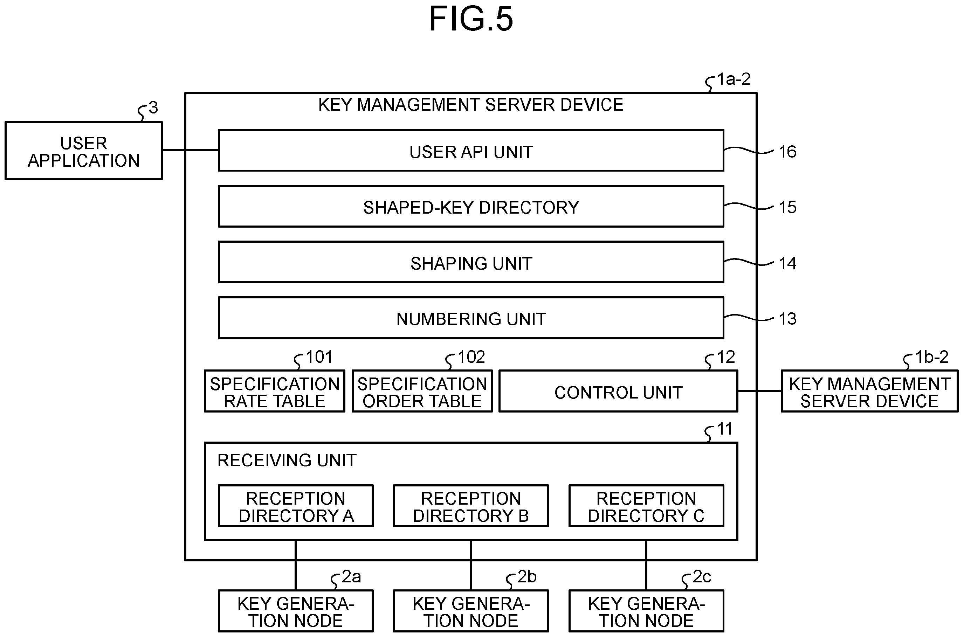

Fig. 5 is a diagram illustrating an exemplary functional configuration of a key management server device 1a-2 according to the second arrangement. The key management server device 1a-2 according to the second arrangement includes the receiving unit 11, the control unit 12, the numbering unit 13, the shaping unit 14, the shaped-key directory 15, and the user API unit 16.

The key management server device 1a-2 according to the second arrangement further stores therein a specification rate table 101 and a specification order table 102. The specification rate table 101 and the specification order table 102 are used by the control unit 12 at the time of performing control.

Based on the specification rate table 101 and the specification order table 102, the control unit 12 according to the second arrangement decides on the reference order for referring to the reception directories A to C, which receive the specification of the QKD keys to be subjected to shaping of the key length, in such a way that the reference order is same between the key management server device 1a-2 and a partner key management server device 1b-2.

### Example of specification rate table

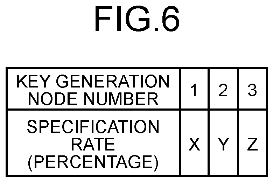

Fig. 6 is a diagram illustrating an example of the specification rate table 101 according to the second arrangement. In the specification rate table 101 illustrated in Fig. 6, combinations of a key generation node number and a specification rate are defined. For example, a key generation node number 1 enables identification of the key generation node 2a. Moreover, a key generation node number 2 enables identification of the key generation node 2b. Furthermore, a key generation node number 3 enables identification of the key generation node 2c.

Moreover, specification rates X, Y, and Z represent the rates each of which indicates the frequency of obtaining the QKD key as the target for processing. Thus, greater the specification rate, the higher is the frequency of obtaining the QKD key as the target for processing.

The control unit 12 on the receiving side (Bob) waits for a communication message, which indicates whether or not the same QKD key is present in the partner key management server device 1b-2, until the elapse of a predetermined timeout period. The control unit 12 counts the number of timeouts for each key generation node 2 that has generated QKD keys, and varies the specification rates in the specification rate table 101 according to that count.

The specification rate either can be calculated simply by taking the inverse proportion of the count or can be calculated by applying weighted rules. The specification rate table 101 is used in deciding on the specification order table 102.

### Examples of deciding on specification order table

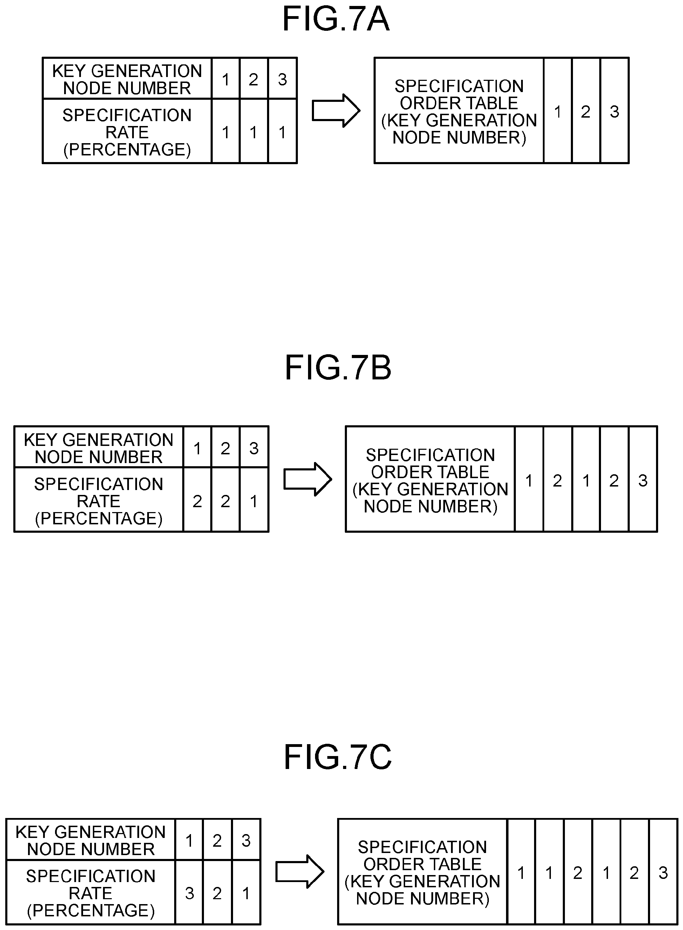

Figs. 7A to 7C are diagrams illustrating decision examples 1 to 3 about the specification order table 102 according to the second arrangement. In Figs. 7A to 7C are illustrated the examples in which the specification order table 102 is decided from the specification rate table 101, and the order of specifying the key generation nodes 2 is decided according to the specification rates.

For example, in the example illustrated in Fig. 7A, since all specification rates are same, the specification is repeated in the order of the key generation node 2a, the key generation node 2b, and the key generation node 2c.

Moreover, for example, in the example illustrated in Fig. 7B, the key generation node 2c having a greater number of timeouts is set to have a lower specification rate as compared to the key generation nodes 2a and 2b. Hence, the specification is repeated in the order of the key generation node 2a, the key generation node 2b, the key generation node 2a, the key generation node 2b, and the key generation node 2c.

Furthermore, for example, in the example illustrated in Fig. 7C, the specification order table 102 is created according to the following rules. Firstly, the key generation nodes 2 having the highest specification rate are placed in the specification order table 102 in order from the key generation node 2 present on the left side of the specification rate table 101, and then the specification rate of the already-placed key generation nodes 2 is decremented from the specification rate table 101. Subsequently, from among the key generation nodes having the highest specification rate in the post-decrementing specification rate table 101, the key generation nodes 2 are placed in the specification order table 102 in order starting from the key generation node 2 present on the left side of the specification rate table 101. As a result of repeating such operations, the specification order table 102 illustrated in Fig. 7C is created.

Meanwhile, the method for deciding on the specification order from the specification rate table can be set in a random manner as long as the rate is matching over a single cycle of repetition.

The control unit 12 keeps looking in the reception directories A to C of the receiving unit 11 while referring to the specification order table 102. When a QKD key is received in any one reception directory, the control unit 12 exchanges the identification of the QKD key with the partner key management server 1b-2 and waits for a response of a QKD key in the next directory.

Moreover, the control unit 12 confirms that the same QKD key is present in the partner key management server 1b-2 and rewrites the specification rate table 101 according to the failure rate of confirmation with the partner key management server 1b-2.

When the identification information of the QKD key that could be confirmed with the key management server 1b-2 is received from the control unit 12, the numbering unit 13 assigns a QKD key uniform number as explained earlier.

In an identical manner to the first arrangement, the numbered QKD key is shaped by the shaping unit 14 to have a fixed key length and is stored in the shaped-key directory 15. When the user application 3 requests for the QKD key, the user API unit 16 sends, to the user, the QKD key that is stored in the shaped-key directory 15.

Given below is the explanation of an operation performed in the key management server device 1a-2 according to the second arrangement for matching the order of the QKD keys, which are to be subjected to key length shaping, across the key management server device 1a-2 and the partner key management server device 1b-2 based on the specification order table 102.

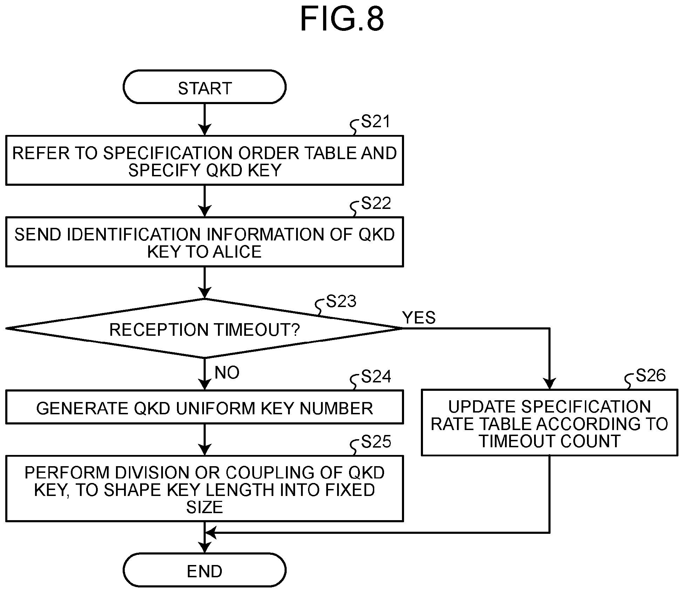

Fig. 8 is a flowchart for explaining an example of the operations performed in the key management server device 1a-2 on the receiving side (Bob) according to the second arrangement. Firstly, the control unit 12 of the Bob refers to the specification order table 102 and specifies the QKD key stored in the reception directory corresponding to the concerned key generation node (Step S21).

Then, the control unit 12 sends, to the Alice, the identification information of the QKD key (i.e., the identifier of the QKD key as assigned by the key generation node 2 and the identifier of the key generation node 2 that generates the QKD key) specified at Step S21 (Step S22).

Subsequently, the control unit 12 waits for a response from the Alice and, if a response is received from the Alice without the occurrence of a timeout (No at Step S23), then the numbering unit 13 generates the QKD uniform key number (Step S24).

Subsequently, the shaping unit 14 either divides the QKD key having the QKD uniform key number assigned thereto or couples the QKD key, which has the QKD uniform key number assigned thereto, with a QKD key that is left over in the previous time, to shape the key length into a fixed size (Step S25).

Meanwhile, if a the timeout occurs (Yes at Step S23), then the control unit 12 updates the timeout counter and updates the specification rate table 101 according to that counter (Step S26).

Given below is the explanation of an operation performed in the key management server device 1b-2 according to the second arrangement for matching the order of QKD keys, which are to be subjected to key length shaping, across the key management server device 1b-2 and the partner key management server device 1a-2.

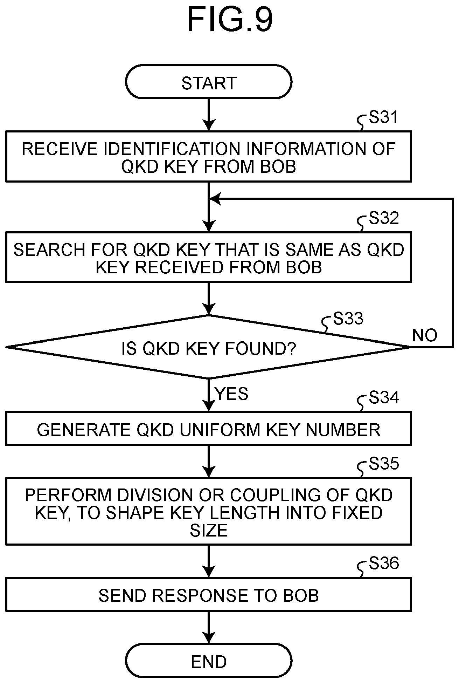

Fig. 9 is a flowchart for explaining an example of the operations performed in the key management server device 1b-2 on the transmitting side (Alice) according to the second arrangement. The operations performed at Steps S31 and S32 are identical to the operations performed at Steps S11 and S12, respectively, (see Fig. 4) according to the first arrangement. Hence, that explanation is not given again.

Subsequently, if the same QKD key as the QKD key present in the Bob is found (Yes at Step S33), then the numbering unit 13 of the Alice generates a QKD uniform key number (Step S34).

On the other hand, if the same QKD key as the QKD key present in the Bob is not found (No at Step S33), then the control unit 12 waits until the concerned QKD key is received from the key generation node 2 and is stored in the corresponding reception directory (i.e., the system control returns to Step S32).

Herein, if the waiting goes on for a certain period of time, then either the Alice can send a timeout message to the Bob or the Bob can determine about the timeout without the Alice sending any timeout message.

Meanwhile, when the identification information of the next QKD is sent from the Bob, the wait state either can be released or can be released only for a certain period of time.

Then, the shaping unit 14 either divides the QKD key having the QKD uniform key number assigned thereto or couples the QKD key, which has the QKD uniform key assigned thereto, with a QKD key that is left over in the previous time, to shape the key length into a fixed size (Step S35). Subsequently, the control unit 12 sends a response (a notification of success) to the Bob (Step S36).

As explained above, in the second arrangement, the control unit 12 sequentially refers to a plurality of memory units (in the second arrangement, the reception directories A to C) according to specification order information (in the second arrangement, the specification order table 102) that indicates the order of reading the QKD keys, which are specified as the targets for shaping processing, from a plurality of memory units. Then, the control unit 12 exchanges, with the partner key management server device 1b-2, the identification information of the QKD keys read from a plurality of memory units according to the specification order information; and identifies the QKD keys specified as the targets for shaping processing with the partner key management server device 1b-2.

Moreover, the control unit 12 according to the second arrangement sends, to the partner kay management server device 1b-2, the identification information of the QKD key specified as the target for shaping processing; receives, from the partner key management server device 1b-2, a response indicating the existence of the QKD key specified as the target for shaping processing; and, decreases the percentage of having a turn referring to the memory unit that is used to store the QKD key specified as the target for shaping processing (in the second arrangement, the reception directories A to C), with increase in waiting time of the response(refer to the earlier explanation with reference to Figs. 7A to 7C).

That is, in the second arrangement, each of the key management server devices 1a-2 and 1b-2, which form a pair, divides or couples the QKD keys generated by the corresponding key generation nodes 2a to 2c and performs the shaping processing for shaping the QKD keys. In the second arrangement, as a result of deciding on the specification order for the reception directories that are used to store the QKD keys specified as the target QKD keys for shaping, it becomes possible to hold down the operation resources, and to prevent a mismatch among the QKD keys thereby enabling prevention of a decline in the key generation rate that may occur due to any such mismatch. Moreover, in the second arrangement, as compared to the first arrangement described earlier, the communication between the Bob and the Alice can be further simplified on account of the fixed specification order for the reception directories A to C.

### Third arrangement

Given below is the description of a third arrangement. In the description of the third arrangement, the same explanation as given in the first arrangement is not repeated. Thus, the following explanation is given only about the differences with the first arrangement.

### Exemplary functional configuration

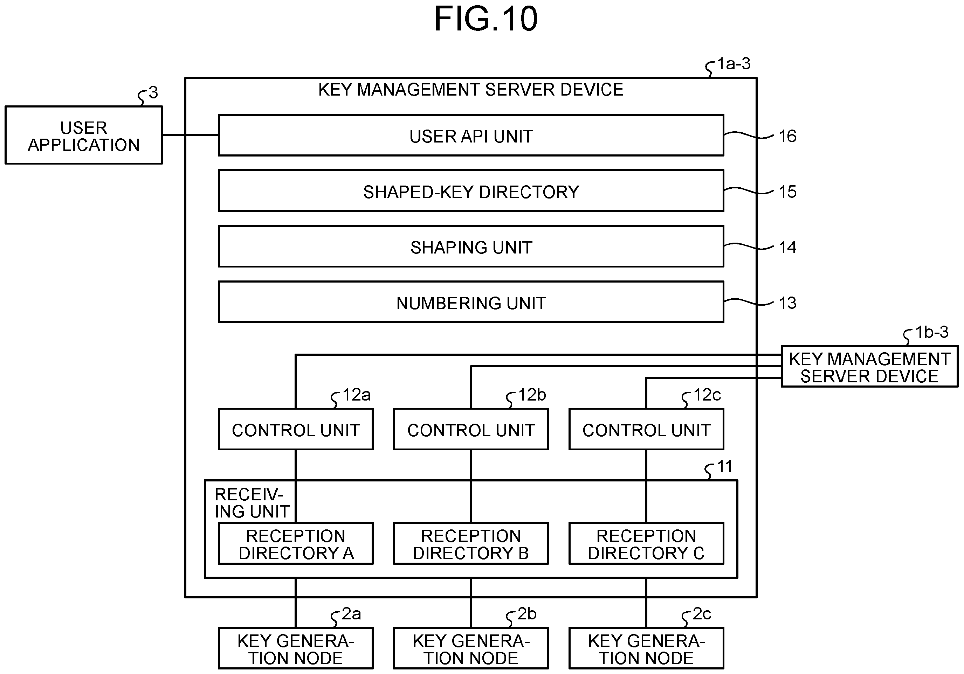

Fig. 10 is a diagram illustrating an exemplary functional configuration of a key management server device 1a-3 according to the third arrangement. The key management server device 1a-3 according to the third arrangement includes the receiving unit 11, control units 12a to 12c, the numbering unit 13, the shaping unit 14, the shaped-key directory 15, and the user API unit 16.

Each of the control units 12a to 12c according to the third arrangement individually controls, with respect to the corresponding pairing key generation node 2, key length shaping with a partner key management server device 1b-3. The partner key management server device 1b-3 too includes the control units 12a to 12c each corresponding to one pairing key generation node 2.

For example, the control unit 12a corresponding to the reception directory A exchanges the identification information of QKD keys with the control unit 12a of the partner key management server device 1b-3. The control units 12b and 12c perform identical operations to the control unit 12a.

The numbering unit 13 receives the identification information of the QKD keys that could be confirmed with the partner key management server 1b-3 and assigns the key numbers. Then, the shaping unit 14 performs shaping with respect to the numbered QKD keys to ensure that the numbered QKD keys have a fixed key length, and stores those QKD keys in the shaped-key directory 15.

Meanwhile, as far as a single key generation node 2 is concerned, in the key distillation process, the order of generation of QKD keys is guaranteed. That is, as explained above in the first and second arrangements, as long as the QKD keys generated by the key generation nodes 2a to 2c do not get mixed, no mismatch occurs in the order of the QKD keys explained above in the second arrangement.

Given below is the explanation of an operation performed in the key management server device 1a-3 according to the third arrangement for matching the order of the QKD keys, which are to be subjected to key length shaping, across the key management server device 1a-3 and the partner key management server device 1b-3.

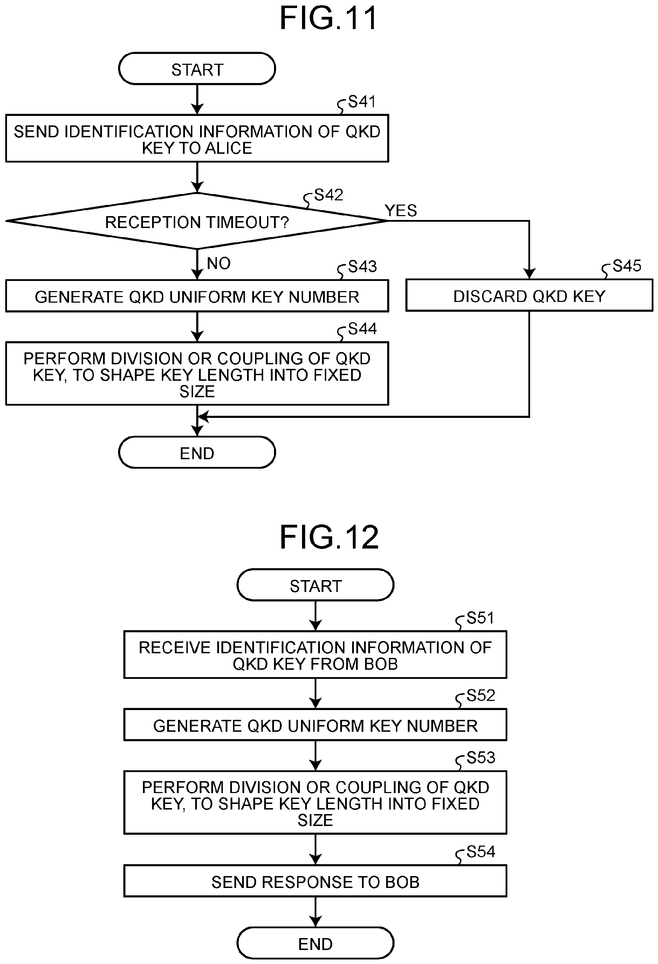

Fig. 11 is a flowchart for explaining an example of the operations performed in the key management server device 1a-3 on the receiving side (Bob) according to the third arrangement. Firstly, the control unit 12a (12b, 12c) of the Bob sends, to the Alice, the identification information of the QKD key stored in the corresponding reception directory A (B, C) (i.e., the identifier of the QKD key assigned by the key generation node 2a (2b, 2c) and the identifier of the key generation node 2a (2b, 2c) that generates the QKD key) (Step S41).

Then, the control unit 12a (12b, 12c) waits for a response from the Alice and, if a response is received from the Alice without the occurrence of a timeout (No at Step S42), then the numbering unit 13 generates the QKD uniform key number (Step S43).

Subsequently, the shaping unit 14 either divides the QKD key having the QKD uniform key number assigned thereto or couples the QKD key, which has the QKD uniform key number assigned thereto, with a QKD key that is left over in the previous time, to shape the key length into a fixed size (Step S44). In the third arrangement, with respect to the QKD keys whose identification information contains the same identifier for the key generation node 2, the division or the coupling is performed based on the order set according to the QKD uniform key numbers.

Meanwhile, if a timeout occurs (Yes at Step S42), then the control unit 12a (12b, 12c) discards the concerned QKD key (Step S45) and waits until the next QKD key is received from the key generation node 2a (2b, 2c) and is stored in the reception directory A (B, C).

Given below is the explanation of an operation performed in the key management server device 1b-3 according to the third arrangement for matching the order of the QKD keys, which are to be subjected to key length shaping, across the partner key management server device 1b-3 and the partner key management server device 1a-3.

Fig. 12 is a flowchart for explaining an example of the operations performed in the key management server device 1b-3 on the transmitting side (Alice) according to the third arrangement. Firstly, the receiving unit 11 of the Alice receives the identification information of a QKD key from the Bob (Step S51) and, based on the identifier of the key generation node 2 as included in the identification information of the QKD key, allots the QKD key to that control unit from among the control units 12a to 12c which forms a pair with the concerned key generation node 2.

Subsequently, the numbering unit 13 receives, from each of the control units 12a to 12c, the QKD key that is identified by the QKD key identifier as included in the QKD key identification information, and generates the QKD uniform key number for that QKD key (Step S52).

Then, the shaping unit 14 either divides the QKD key having the QKD uniform key number assigned thereto or couples the QKD key, which has the QKD uniform key assigned thereto, with a QKD key that is left over in the previous time, to shape the key length into a fixed size (Step S44). In the third arrangement, with respect to the QKD keys whose identification information contains the same identifier for the key generation node 2, the division or the coupling is performed based on the order set according to the QKD uniform key numbers.

Subsequently, each of the control units 12a to 12c sends a response (a notification of success) to the Bob (Step S54).

As explained above, the key management server device 1b-3 according to the third arrangement includes a plurality of control units each of which identifies, with the partner key management server device 1b-3, the QKD keys stored in the corresponding memory unit from among a plurality of memory units (in the third arrangement, the reception directories A to C). Then, with respect to the QKD keys whose identification information contains the same identifier for the key generation node 2, the shaping unit 14 performs the division or the coupling in the order set according to the QKD uniform key numbers.

That is, according to the third arrangement, in each of the key management server devices 1a-3 and 1b-3 that form a pair, the QKD keys of the key generation nodes 2a to 2c are divided or coupled separately for each of the key generation nodes 2 that generate the QKD keys. As a result, as compared to the first and second arrangement, there is no need to correct the order of key shaping according to the generation timings at which the QKD keys are generated by the key generation nodes 2. That enables achieving further simplification of the flow of the shaping proceesing for shaping the QKD keys.

Lastly, given below is the explanation about an exemplary hardware configuration of the key management server device 1 (1-2, 1-3) according to the first arrangement to the third arrangement.

### [Exemplary hardware configuration]

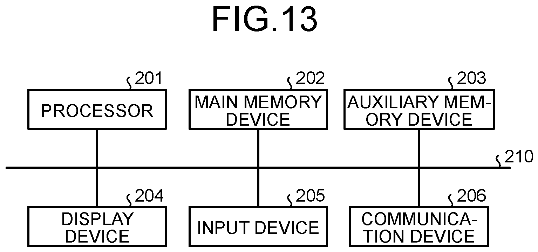

Fig. 13 is a diagram illustrating an exemplary hardware configuration of the key management server device 1 (1-2, 1-3) according to the first arrangement to the third arrangement. The key management server device 1 (1-2, 1-3) according to the first arrangement to the third arrangement includes a processor 201, a main memory device 202, an auxiliary memory device 203, a display device 204, an input device 205, and a communication device 206. The processor 201, the main memory device 202, the auxiliary memory device 203, the display device 204, the input device 205, and the communication device 206 are connected to each other by a bus 210.

Meanwhile, in the key management server device 1 (1-2, 1-3), some of the constituent elements can be omitted. For example, when the input function and the display function of an external device is available for use, the key management server device 1 (1-2, 1-3) need not include the display device 204 and the input device 205.

The processor 201 executes a computer program that has been read from the auxiliary memory device 203 into the main memory device 202. The main memory device 202 is a memory such as a read only memory (ROM) or a random access memory (RAM). The auxiliary memory device 203 is a hard disk drive (HDD) or a memory card.

Each of the reception directories A to C of the receiving unit 11 as well as the shaped-key directory 15 is implemented using the main memory device 202 and the auxiliary memory device 203.

The display device 204 is, for example, a liquid crystal display. The input device 205 represents an interface meant for operating the key management server device 1 (1-2, 1-3). Meanwhile, the key management server device 1 (1-2, 1-3) can have a touch-sensitive panel that is equipped with the display function and the input function. The communication device 206 represents an interface meant for communicating with other devices.

For example, the computer program executed in the key management server device 1 (1-2, 1-3) is recorded as an installable file or an executable file in a computer-readable memory medium such as a memory card, a hard disk, a compact disc rewritable (CD-RW), a compact disc read only memory (CD-ROM), or a compact disc recordable (CD-R); and is provided as a computer program product.

Alternatively, for example, the key management server device 1 (1-2, 1-3) can be stored in a downloadable manner in a computer connected to a network such as the Internet.

Still alternatively, for example, the key management server device 1 (1-2, 1-3) can be distributed, without involving downloading, via a network such as the Internet.

Still alternatively, for example, the key management server device 1 (1-2, 1-3) can be stored in advance in a ROM.

The computer program executed in key management server device 1 (1-2, 1-3) has modular configuration that includes functions, from among the functional configuration explained earlier, also implementable using a computer program. Regarding such functions, as the actual hardware, the processor 201 reads the computer program from the memory medium and executes it, so that the function blocks explained earlier are loaded in the main memory device 202. That is, the function blocks explained earlier are generated in the main memory device 202.

Meanwhile, some or all of the functions explained earlier can be implemented using hardware such as an integrated circuit (IC) instead of implementing them using software.

Moreover, the functions can be implemented using a plurality of processors 201. In that case, each processor 201 either can implement one of the functions, or can implement two or more functions.

While certain arrangements have been described, these arrangements have been presented by way of example only, and are not intended to limit the scope of the claims. Indeed, the apparatuses described herein may be embodied in a variety of other forms; furthermore various omissions, substitutions and changes in the form of the apparatuses described herein may be made.

Example 1. A key management server device includes a receiving unit, a control unit, a numbering unit, and a shaping unit. The receiving unit receives, from a plurality of key generation nodes, quantum key distribution (QKD) keys generated through a key distillation process for QKD, and stores the QKD keys in a plurality of memory units corresponding to the plurality of key generation nodes. The control unit identifies QKD keys to be specified as targets for shaping processing with a partner key management server device, by exchanging identification information of the QKD keys with the partner key management server device. The numbering unit, based on the identification information of the QKD keys, performs numbering in such a way that order of dividing a QKD key or of coupling a QKD key with a part of a QKD key that is not used in previous shaping processing is identical with the partner key management server device. The shaping unit performs shaping processing for shaping key lengths of QKD keys to a fixed length by performing the division of the QKD key or the coupling of the QKD key with the part of the QKD key that is not used in the previous shaping processing in the order.

Example 2. The key management server device according to Example 1, further includes a user application programming interface (API) unit that provides the QKD keys shaped to have the fixed length, to a user application.

Example 3. In the key management server device according to Example 1, the identification information of the QKD keys contains identifiers of the QKD keys and identifiers of key generation nodes that generated the QKD keys.

Example 4. In the key management server device according to Example 1, the control unit requests the partner key management server device to perform numbering based on the identification information of the QKD keys in such a way that the order is identical, by sending the identification information of the QKD keys to the partner key management server device. The shaping unit performs the shaping processing for shaping a key length of a QKD key to the fixed length by performing the division of the QKD key or the coupling of the QKD key with the part of the QKD key that is not used in the previous shaping processing in the order, when receiving, from the partner key management server device, a notification indicating that a QKD key identified by the identification information of the QKD key exists.

Example 5. In the key management server device according to Example 4, when receiving, from the partner key management server device, a notification indicating that a QKD key identified by the identification information of the QKD keys does not exist, the shaping unit searches for, as a QKD key to be specified as the target for the shaping processing, either a QKD key that has been previously specified as a target for shaping processing before elapse of a predetermined period of time, or a QKD key that is specified as the target for shaping in chronological order of generation, from among QKD keys not yet specified as a target for shaping processing.

Example 6. In the key management server device according to Example 4, the control unit discards a QKD key that has been specified as a target for shaping processing for a predetermined number of times, without receiving a notification indicating that a QKD key identified by the identification information of the QKD key exists, from the partner key management server device.

Example 7. In the key management server device according to any one of Examples 1 to 6, the control unit sequentially refers to the plurality of memory units according to specification order information indicating order of reading, from the plurality of memory units, QKD keys to be specified as targets for shaping processing, and identifies the QKD keys to be specified as the targets for the shaping processing with the partner key management server device, by exchanging, with the partner key management server device, the identification information of the QKD keys that are read from the plurality of memory units according to the order specification information.

Example 8. In the key management server device according to Example 7, the control unit sends, to the partner key management server device, identification information of a QKD key to be specified as a target for shaping processing, receives, from the partner key management server device, a response indicating that the QKD key to be specified as the target for the shaping processing exists, and decreases percentage of taking a turn referring to a memory unit that stores the QKD key to be specified as the target for the shaping processing, with increase in waiting time of the response.

Example 9. In the key management server device according to Example 1, the control unit includes a plurality of control units that identify, with the partner key management server device, QKD keys each stored in one of the plurality of memory units. The identification information of the QKD keys contains identifiers of the QKD keys and identifiers of key generation nodes that generate the QKD keys. The shaping unit performs the division or the coupling in the order, on QKD keys having an identical identifier of a key generation node contained in identifiers of the QKD keys.

Example 10. A QKD system includes a plurality of first key generation nodes, a first key management server device, a plurality of second key generation nodes, and a second key management server device. The plurality of first key generation nodes generate quantum key distribution (QKD) keys generated through a key distillation process for QKD. The first key management server device is connected to the plurality of first key generation nodes. The plurality of second key generation nodes generate QKD keys through a key distillation process for QKD. The second key management server device is connected to the plurality of second key generation nodes and to the first key management server device. The first key management server device includes a receiving unit, a control unit, a numbering unit, and a shaping unit. The receiving unit receives the QKD keys from the plurality of first key generation nodes, and stores the QKD keys in a plurality of memory units corresponding to the plurality of first key generation nodes. The control unit identifies QKD keys to be specified as targets for shaping with the second key management server device, by exchanging identification information of the QKD keys with the second key management server device. The numbering unit, based on the identification information of the QKD keys, performs numbering in such a way that order of dividing a QKD key or of coupling a QKD key with a part of a QKD key that is not used in previous shaping processing is identical with the second key management server device. The shaping unit performs shaping processing for shaping key lengths of the QKD keys to a fixed length by performing the division of the QKD key or the coupling of the QKD key with the part of the QKD key that is not used in the previous shaping processing in the order.

Example 11. A key management method includes: by a key management server device, receiving, from a plurality of key generation nodes, quantum key distribution (QKD) keys generated through a key distillation process for QKD, and storing the QKD keys in a plurality of memory units corresponding to the plurality of key generation nodes; by the key management server device, identifying QKD keys to be specified as targets for shaping processing with a partner key management server device by exchanging identification information of the QKD keys with the partner key management server device; by the key management server device, performing numbering, based on the identification information of the QKD keys, in such a way that order of dividing a QKD key or of coupling a QKD key with a part of a QKD key that is not used in previous shaping processing is identical with the partner key management server device; and by the key management server device, performing shaping processing for shaping key lengths of the QKD keys to a fixed length by performing the division of a QKD key or performing coupling of a QKD key with a part of a QKD key that is not used in previous shaping processing in the order.

Example 12. A computer-readable medium includes programmed instructions. The instructions causing a computer to function as a receiving unit, a control unit, a numbering unit, and a shaping unit. The receiving unit receives, from a plurality of key generation nodes, quantum key distribution (QKD) keys generated through a key distillation process for QKD, and stores the QKD keys in a plurality of memory units corresponding to the plurality of key generation nodes. The control unit identifies QKD keys to be specified as targets for shaping processing with a partner key management server device, by exchanging identification information of the QKD keys with the partner key management server device. The numbering unit, based on the identification information of the QKD keys, performs numbering in such a way that order of dividing a QKD key or of coupling a QKD key with a part of a QKD key that is not used in previous shaping processing is identical with the partner key management server device. The shaping unit performs shaping processing for shaping key lengths of QKD keys to a fixed length by performing the division of the QKD key or the coupling of the QKD key with the part of the QKD key that is not used in the previous shaping processing in the order.

## Claims

1. A key management server device (1a) comprising:
a receiving unit (11) that receives, from a plurality of key generation nodes (2), quantum key distribution (QKD) keys generated through a key distillation process for QKD, and stores the QKD keys in a plurality of memory units corresponding to the plurality of key generation nodes (2);
a control unit (12) that identifies QKD keys to be specified as targets for shaping processing with a partner key management server device (1b), by exchanging identification information of the QKD keys with the partner key management server device (1b);
a numbering unit (13) that, based on the identification information of the QKD keys, performs numbering in such a way that order of dividing a QKD key or of coupling a QKD key with a part of a QKD key that is not used in previous shaping processing is identical with the partner key management server device (1b); and
a shaping unit (14) that performs shaping processing for shaping key lengths of QKD keys to a fixed length by performing the division of the QKD key or the coupling of the QKD key with the part of the QKD key that is not used in the previous shaping processing in the order.

2. The key management server device (1a) according to claim 1, further comprising a user application programming interface (API) unit (16) that provides the QKD keys shaped to have the fixed length, to a user application (3).

3. The key management server device (1a) according to claim 1, wherein the identification information of the QKD keys contains identifiers of the QKD keys and identifiers of key generation nodes (2) that generated the QKD keys.

4. The key management server device (1a) according to claim 1, wherein
the control unit (12) requests the partner key management server device (1b) to perform numbering based on the identification information of the QKD keys in such a way that the order is identical, by sending the identification information of the QKD keys to the partner key management server device (1b), and
the shaping unit (14) performs the shaping processing for shaping a key length of a QKD key to the fixed length by performing the division of the QKD key or the coupling of the QKD key with the part of the QKD key that is not used in the previous shaping processing in the order, when receiving, from the partner key management server device (1b), a notification indicating that a QKD key identified by the identification information of the QKD key exists.

5. The key management server device (1a) according to claim 4, wherein, when receiving, from the partner key management server device (1b), a notification indicating that a QKD key identified by the identification information of the QKD keys does not exist, the shaping unit (14) searches for, as a QKD key to be specified as the target for the shaping processing, either a QKD key that has been previously specified as a target for shaping processing before elapse of a predetermined period of time, or a QKD key that is specified as the target for shaping in chronological order of generation, from among QKD keys not yet specified as a target for shaping processing.

6. The key management server device (1a) according to claim 4, wherein the control unit (12) discards a QKD key that has been specified as a target for shaping processing for a predetermined number of times, without receiving a notification indicating that a QKD key identified by the identification information of the QKD key exists, from the partner key management server device (1b).

7. The key management server device (1a) according to any one of claims 1 to 6, wherein the control unit (12) sequentially refers to the plurality of memory units according to specification order information indicating order of reading, from the plurality of memory units, QKD keys to be specified as targets for shaping processing, and identifies the QKD keys to be specified as the targets for the shaping processing with the partner key management server device (1b), by exchanging, with the partner key management server device (1b), the identification information of the QKD keys that are read from the plurality of memory units according to the order specification information.

8. The key management server device (1a) according to claim 7, wherein the control unit (12) sends, to the partner key management server device (1b), identification information of a QKD key to be specified as a target for shaping processing, receives, from the partner key management server device (1b), a response indicating that the QKD key to be specified as the target for the shaping processing exists, and decreases percentage of taking a turn referring to a memory unit that stores the QKD key to be specified as the target for the shaping processing, with increase in waiting time of the response.

9. The key management server device (1a) according to claim 1, wherein
the control unit (12) includes a plurality of control units that identify, with the partner key management server device (1b), QKD keys each stored in one of the plurality of memory units,
the identification information of the QKD keys contains identifiers of the QKD keys and identifiers of key generation nodes (2) that generate the QKD keys, and
the shaping unit (14) performs the division or the coupling in the order, on QKD keys having an identical identifier of a key generation node (2) contained in identifiers of the QKD keys.

10. A QKD system comprising:
a key management server device (1a) according to any one of claims 1 to 9, the key management server device (1a) being connected to the plurality of key generation nodes (2) ;
the plurality of key generation nodes (2);
the partner key management server device (1b); and
a plurality of second key generation nodes (2) that generate QKD keys through a key distillation process for QKD, and connected to the partner key management server.

11. A key management method comprising:
by a key management server device (1a), receiving, from a plurality of key generation nodes (2), quantum key distribution (QKD) keys generated through a key distillation process for QKD, and storing the QKD keys in a plurality of memory units corresponding to the plurality of key generation nodes (2);
by the key management server device (1a), identifying QKD keys to be specified as targets for shaping processing with a partner key management server device (1b) by exchanging identification information of the QKD keys with the partner key management server device (1b);
by the key management server device (1a), performing numbering, based on the identification information of the QKD keys, in such a way that order of dividing a QKD key or of coupling a QKD key with a part of a QKD key that is not used in previous shaping processing is identical with the partner key management server device (1b); and
by the key management server device (1a), performing shaping processing for shaping key lengths of the QKD keys to a fixed length by performing the division of a QKD key or performing coupling of a QKD key with a part of a QKD key that is not used in previous shaping processing in the order.
